(19) Europäisches Patentamt
European Patent Office
Office européen des brevets

(11) **EP 3 138 939 A2**

(12) **EUROPEAN PATENT APPLICATION**

(43) Date of publication:
**08.03.2017 Bulletin 2017/10**

(51) Int Cl.:
*C23C 18/20* (2006.01)   *C25D 11/04* (2006.01)
*C25D 11/20* (2006.01)   *C25D 11/18* (2006.01)
*C25D 11/24* (2006.01)   *C23C 18/18* (2006.01)
*C25D 11/02* (2006.01)   *C25D 5/02* (2006.01)
*C23C 18/36* (2006.01)

(21) Application number: **16173375.3**

(22) Date of filing: **07.06.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **15.06.2015 US 201514740032**

(71) Applicant: **Palo Alto Research Center, Incorporated**
**Palo Alto, CA 94304 (US)**

(72) Inventors:
• **CASSE, Bernard D.**
**Saratoga, CA 95070-4642 (US)**
• **LIU, Victor**
**Mountain View, CA California 94040 (US)**
• **VOLKEL, Armin R.**
**Mountain View, CA California 94040 (US)**

(74) Representative: **Gill Jennings & Every LLP**
**The Broadgate Tower**
**20 Primrose Street**
**London EC2A 2ES (GB)**

(54) **PRODUCING PASSIVE RADIATIVE COOLING PANELS AND MODULES**

(57) Passive radiative cooling panels are produced by anodizing an aluminum foil sheet to form metamaterial nanostructures and then forming a plated metal over the metamaterial nanostructures to produce an ultra-black emitter, and then securing a reflective layer (e.g., a solar mirror film) onto the ultra-black emitter. The process is implementable in a roll-to-roll-type fabricating system in which a continuous aluminum foil ribbon extends from a feed roll through an anodization station to a reflector mounting station such that a first ribbon section under-goes anodization while a second ribbon section undergoes plating and a reflective layer is mounted onto a third ribbon section. A modified Anodic Aluminum Oxide (AAO) self-assembly technique is utilized to generate tapered nanopores that are then plated to generate an ultra-black emitter capable of generating broadband radiant energy with an emissivity close to unity. Modules are produced by mounting the panels onto conduit structures.

FIG. 1

EP 3 138 939 A2

**Description**

FIELD OF THE INVENTION

This invention relates to passive radiative cooling devices, and in particular to production methods for generating high-quality passive radiative cooling panels in large volumes at a low cost.

BACKGROUND OF THE INVENTION

Large cooling systems play an important role in the generation of electricity. Most power plants generate electricity by way of converting a coolant (typically water) into a heated gaseous state (e.g., steam) using a heat source (e.g., a nuclear reactor core, a gas/coal/oil furnace, or a solar concentrator), and then passing the heated gaseous coolant through a generator (i.e., a rotating machine that converts mechanical power into electrical power). Before the coolant exiting the generator can be returned to the heat source, the coolant must be entirely reconverted from its gaseous state to its liquid state, which typically involves dissipating sufficient heat from the coolant to drop the coolant's temperature below its boiling point temperature. Due to the large volumes of coolant used in large power plants, this cooling function is typically performed by piping the coolant leaving the generators to large cooling systems disposed outside the power plant, whereby heat from the coolant is harmlessly dissipated into the surrounding environment. Failure to fully reconvert the coolant to its liquid state before returning to the power plant significantly reduces the power plant's efficiency. Hence, large cooling systems play and important role of in the generation of electricity.

Cooling systems can be categorized into two general classes: wet cooling systems that consume water (i.e., rely on evaporation to achieve the desired cooling power), and dry cooling systems that utilize convection or radiation to remove heat without consuming water. Generally speaking, a dry cooling system based on conventional technology would occupy a significantly larger area and require higher operating costs than a comparable wet cooling system capable of generating the same amount of cooling power. Hence, most large power plants, particularly those in hot and humid climate zones where traditional dry-cooling is impractical, utilize wet cooling systems that collectively consume enormous amounts of water (i.e., tens of billions of gallons of water per day). That is, when water is abundant and cheap, wet cooling systems can be significantly less expensive to build and operation than dry cooling systems based on conventional technology. However, in dry regions or regions experiencing curtailed water supplies (e.g., due to drought), the use of wet cooling systems can become problematic when precious water resources are necessarily diverted from residential or agricultural areas for use in a power plant.

Radiative cooling is a form of dry cooling in which heat dissipation is achieved by way of radiant energy. All objects constantly emit and absorb radiant energy, and undergo radiative cooling when the net energy flow is outward, but experience heat gain when the net energy flow is inward. For example, passive radiative cooling of buildings (i.e., radiative cooling achieved without consuming power, e.g., to turn a cooling fan) typically occurs during the night when long-wave radiation from the clear sky is less than the long-wave infrared radiation emitted from the building's rooftop. Conversely, during the daytime solar radiation directed onto the building's roof is greater than the emitted long-wave infrared radiation, and thus there is a net flow into the sky.

In simplified terms, the cooling power, $P_{cooling}$, of a radiating surface is equal to the radiated power, $P_{rad}$, less the absorbed power from atmospheric thermal radiation from the air, $P_{atm}$, the solar irradiance, $P_{sun}$, and conduction and convection effects, $P_{con}$:

$$P_{cooling} = P_{rad} - P_{atm} - P_{sun} - P_{con} \qquad (Equation\ 1)$$

In practical settings, $P_{atm}$ is determined by ambient temperature, $P_{sun}$ varies in accordance with time of day, cloud cover, etc., and is zero at nightime, and $P_{con}$ is determined by structural details of the cooler. From Equation 1, maximizing $P_{cooling}$ during daytime entails increasing $P_{rad}$ by increasing the emissivity of the surface, minimizing the effect of $P_{sun}$ (e.g., by making use of a broadband reflector), and mitigating convection and conduction effects $P_{con}$ by way of protecting the cooler from convective heat sources. Assuming a combined non-radiative heat coefficient of 6.9 W/m²K, Eq. 1 thus yields a practical minimum target $P_{rad}$ value of 55 W/m² during daytime, and 100 W/m² during nighttime, which translates into a drop in temperature around 5°C below ambient.

An ideal high-performance passive radiative cooler can thus be defined as a passive radiative cooling device that satisfies the following three conditions. First, it reflects at least 94% of solar light (mostly at visible and near-infrared wavelengths) to prevent the cooling panel from heating up, hence minimizing $P_{sun}$. Second, it exhibits an emissivity close to unity at the atmospheric transparency windows (e.g. 8-13 $\mu$m (dominant window), 16-25 $\mu$m, etc.) and zero emission outside these windows. This ensures that the panel doesn't strongly emit at wavelengths where the atmosphere is opaque, hence minimizing $P_{atm}$. Third, the device is sealed from its environment to minimize convection that would otherwise contribute to an additional heat load, hence minimizing $P_{conv}$. Convection on top of the device is a detriment in this case since it operates below ambient temperature. In short, an ideal high-performance passive radiative cooler is an engineered structure capable of "self-cooling" below ambient temperatures, even when exposed to direct sunlight, and requires no power input or material phase change to achieve its cooling power.

Currently there are no commercially available passive radiative cooling technologies that meet the three conditions defining an ideal high-performance passive radiative cooler. Existing radiative cooling foils can be inexpensive, but are currently limited to operating in the absence of sunlight (i.e., mostly at nighttime). Current state of the art attempts to achieve daytime passive radiative cooling utilize emitter-over-reflector architectures that require complex spectrally-selective emitter materials that are too expensive to provide commercially viable alternatives to traditional powered cooling approaches. Moreover, there are no (i.e., zero) passive radiative cooling technologies, commercial or otherwise, that are easily scalable to provide dry cooling for large power plants disposed in hot or humid regions. That is, the challenge for dry cooling of power plants is to design photonic structures that can be easily fabricated and scaled up to very large areas (e.g. 1 km$^2$) at low cost.

What is needed is a low-cost method for producing high-performance passive (i.e., requiring no power/electricity input) radiative cooling devices that avoids the high-cost and complexity associated with conventional attempts. What is also needed is a low-cost, high-throughput method for mass-producing passive radiative cooling panels such that they can be utilized to provide cost-effective and scalable dry cooling systems for power plants located in hot and humid climate zones or other regions experiencing curtailed water supplies where traditional dry-cooling remains impractical and/or where insufficient water is available to support the significant water consumption required by power plant wet cooling systems.

SUMMARY OF THE INVENTION

The present invention is directed to methods for producing passive radiative cooling panels by fabricating an ultra-black emitter on aluminum foil using modified anodization and metal plating processes, and then mounting a reflective layer over the ultra-black emitter. The modified anodization process is utilized to produce metamaterial nanostructures disposed in an ultra-black metamaterial-based pattern on the aluminum foil, and then the metal plating process is utilized to form a plated metal layer over the metamaterial nanostructures such that the resulting metal-plated metamaterial nanostructures are configured to generate atmospheric transparency window (ATW) radiant energy (e.g., radiant energy having wavelengths in the range of $8\mu m$ to $13\mu m$) with an emissivity that is close to unity (i.e., at least 0.998). The reflective layer is then mounted over the ultra-black emitter metal coated metamaterial nanostructures, and is implemented using a material configured to both shield the ultra-black emitter from incident solar radiation (i.e., the reflective layer material exhibits a reflectance of at least 90% for radiant energy with wavelengths of $2\mu m$ or less), and also configured to transmit the ATW radiant energy emitted by the metal-plated metamaterial nanostructures (i.e., the reflective layer material exhibits a reflectance of 10% or less for radiant energy having wavelengths in the range of $8\mu m$ to $13\mu m$), whereby the emitted ATW radiant energy passes through the reflective layer and Earth's atmosphere for absorption in space, whereby the panel produces a net cooling effect even during daytime hours. According to an aspect of the invention, the method produces passive radiative cooling panels according to a novel reflector-over-emitter arrangement in which the ultra-black emitter is disposed under the reflective layer (i.e., as compared with conventional approaches where the reflector is combined with or disposed under an emitter). This novel two-layer panel production method avoids the high-cost and complexity associated with conventional dry cooling approaches by facilitating the use of production processes (e.g., anodization and electroless plating) that are both scalable to large-area roll-to-roll production and do not require expensive photolithographic patterning. Moreover, the present inventors found that two or more commercially available solar mirror films exhibit acceptable optical characteristics for implementation as the reflective layer, whereby overall production costs are further controlled by way of utilizing existing, cost-effective reflective layer materials.

According to an embodiment of the present invention, a roll-to-roll fabrication system is utilized to provide a low-cost, high-throughput method for producing the metamaterials-enhanced passive radiative cooling panels described above on an aluminum foil ribbon that is drawn from a feed roller sequentially through an anodization station, a metal plating station, and then a reflector mounting station. The anodization station includes a (first) guide mechanism (e.g., guide rollers) that is configured to guide a first section of the aluminum ribbon through first chemical bath (e.g., a tank containing an acid solution). The anodization station also includes a cathode disposed in the chemical bath, and a control circuit that controls a voltage between the cathode and the immersed first ribbon section such that an aluminum oxide layer is generated on the aluminum foil in a way that forms metamaterial nanostructures (e.g., nanopores or nanotubes) disposed in an ultra-black metamaterial-based pattern. The metal plating station is disposed downstream from the anodization station and includes a (second) guide mechanism configured to guide a second section of the aluminum ribbon through a second chemical bath (i.e., a plating solution disposed in a tank), where the metal plating station is configured to deposit a suitable plating metal (e.g., Ni, Cu or Ag) over the previously formed metamaterial nanostructures, thereby producing the metal-plated metamaterial nanostructures configured as described above to generate ATW radiant energy with emissivity close to unit. The reflector mounting station is disposed downstream from the metal plating station and is configured to guide (e.g., from a second feed roller) a reflective layer having the optical characteristics mentioned above onto a third section of the aluminum ribbon such that the reflective layer is mounted onto the third ribbon section over the metal-plated metamaterial nanostructures to form a laminated panel structure. An optional cutting station is then utilized to cut sections of the laminated panel structure into individual panels. The passive radiative cooling approach inherently requires a large area (i.e., square kilometers) of panels when it comes to power plant dry cooling. This implies that the main techno-economic challenge rests on the ability to cost-effectively mass-produce these radiative cooling panels for integration onto the supplemental cooling modules. The roll-to-roll fabrication system and its associated methodology meet this techno-economic challenge by facilitating continuous, high-throughput fabrication of high-performance passive radiative cooling panels.

According to a presently preferred embodiment, the production method for fabricating high-performance passive radiative cooling panels utilizes a modified Anodic Aluminum Oxide (AAO) self-assembly template technique to generated tapered nanopores disposed in a hexagonally packed array on an aluminum foil, and then utilizes electroless plating to form a plated metal layer (e.g., Ni, Cu or Ag) inside the tapered nanopores. Specifically, the formation of aluminum oxide on the aluminum foil is controlled by way of gradually increasing the voltage applied between the aluminum foil and the cathode (e.g., from 10 Volts to 60 Volts), whereby tapered nanopore are formed as a pit-like cavities having open upper ends located at a top surface of the oxide layer, closed lower ends, and substantially conical-shaped side walls extending between the open upper end and the closed lower end. Gradually increasing the applied voltage forms the tapered nanopores with decreasing tapered side walls (i.e., a diameter of the conic side wall decreases inside each tapered nanopore). By controlling the applied voltage and other anodization process parameters, tapered nanopores having a size suitable for generating ATW radiant energy (e.g., having nominal widths in the range of 100nm to 1 $\mu$m) are generated on the aluminum foil. In a presently preferred embodiment, the aluminum foil is then pretreated using PdCl$_2$ to activate the aluminum oxide surface, and then electroless plating is performed by immersing the aluminum foil in a nickel-phosphorous bath, whereby Ni-coated tapered nanopores are generated. Such metal-plated tapered nanopores form a new class of ultra-black metamaterial that are believed to provide superior optical characteristics for generating ATW radiant energy with an emissivity close to unity.

According to another embodiment of the present invention, a method is provided for producing modularized units (modules) that combines the high-throughput production methods for fabricating high-performance passive radiative cooling panels described above with a conduit structure mounting process in which a conduit structure is mounted to each panel under the aluminum foil, and forms, in combination with a lower (second) surface of the aluminum foil, a flow channel through which coolant from a power plant (or other object) may be pumped by way of inflow and outflow pipes. The flow channel is configured such that the coolant flows against (i.e., contacts) a lower (second) surface of the aluminum foil as it passes through the conduit structure, whereby thermal energy from the coolant is transferred through the aluminum foil to the metal-coated tapered nanopores for conversion into ATW radiant energy, which can then transmitted through the reflective layer into cold near space. The modules are configured for connection in parallel and series by way of the inflow and outflow pipes to form cost-effective and scalable dry cooling systems for power plants located in hot and humid climate zones or other regions experiencing curtailed water supplies where traditional dry-cooling remains impractical and/or where insufficient water is available to support the significant water consumption required by power plant wet cooling systems. The present invention thus facilitates the low-cost production of passive radiative cooling systems by utilizing modified anodization and electroless processes to generate ultra-black emitters that can be performed using existing anodization and electroless production equipment, and by exploiting the novel emitter-under-reflector arrangement that facilitates the use of commercially available solar mirror films. Because etch rates for hard anodizations and electroless plating are on the order of 15-25 nm/s, the production method of the present invention is amenable to fabrication speeds of 7 ft/s or greater, which enables the wide-spread implementation of scalable, high-performance passive radiative cooling systems for power plants, thereby preventing the consumption billions of gallons of water daily by enabling the replacement of existing wet cooling systems.

BRIEF DESCRIPTION OF THE DRAWINGS

These and other features, aspects and advantages of the present invention will become better understood with regard to the following description, appended claims, and accompanying drawings, where:

Fig. 1 is a simplified diagram showing a roll-to-roll-type fabrication system for producing metamaterials-enhanced passive radiative cooling panels on an aluminum ribbon according to an embodiment of the present invention;
Fig. 2 is a cross-sectional side view showing a passive radiative cooling panel produced in accordance with a specific embodiment of the present invention;

Figs. 3A, 3B, 3C, 3D, 3E, 3F and 3G are cross-sectional side views showing a method for producing an ultra-black emitter of the passive radiative cooling panel of Fig. 2 according to an exemplary embodiment of the present invention;

Fig. 4 is a graph depicting exemplary optical properties of the ultra-black emitter layer utilized in the passive radiative cooling panel of Fig. 2;

Fig. 5 is a top plan view depicting an exemplary array of nanopores arranged in a hexagonal pattern;

Fig. 6 is top side perspective view showing a module including the passive radiative cooling panel of Fig. 2 according to another exemplary embodiment of the present invention;

Fig. 7 is a simplified diagram showing a simplified passive radiative cooling system utilizing the module of Fig. 6 according to another exemplary embodiment of the present invention;

Fig. 8 is a top side perspective view showing an exemplary passive radiative cooling system including multiple modules connected in series and parallel between inflow and outflow pipes according to another embodiment of the present invention; and

Fig. 9 is a diagram depicting an alternative two-step anodization process according to an alternative embodiment of the present invention.

DETAILED DESCRIPTION OF THE DRAWINGS

The present invention relates to an improvement in passive reflective cooling. The following description is presented to enable one of ordinary skill in the art to make and use the invention as provided in the context of a particular application and its requirements. As used herein, directional terms such as "upper", "upward-facing", "lower", "downward-facing", "top", and "bottom", are intended to provide relative positions for purposes of description, and are not necessarily intended to designate an absolute frame of reference. Various modifications to the preferred embodiment will be apparent to those with skill in the art, and the general principles defined herein may be applied to other embodiments. Therefore, the present invention is not intended to be limited to the particular embodiments shown and described, but is to be accorded the widest scope consistent with the principles and novel features herein disclosed.

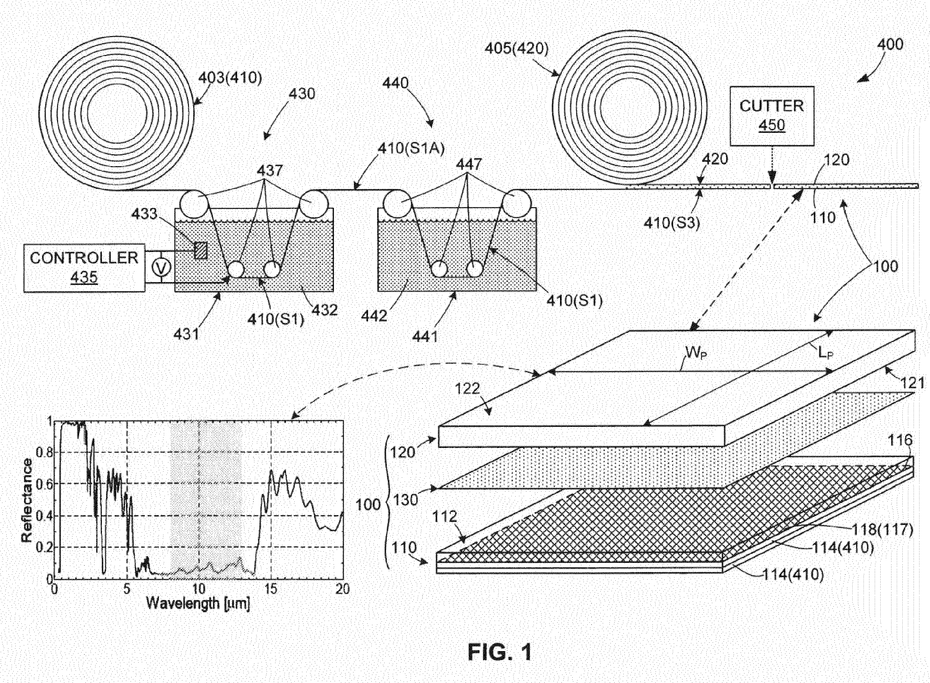

Fig. 1 is a simplified diagram depicting a roll-to-roll fabrication system 400 for producing metamaterials-enhanced passive radiative cooling panels 100 according to a generalized exemplary embodiment of the present invention. Note that the arrangement illustrated in Fig. 1 focuses on the overall fabrication concept, and that all ancillary components (e.g. water baths, electrodes, etc.) have been omitted for clarity.

Referring to Fig. 1, to facilitate high throughput and low production costs, system 400 produces passive radiative cooling panels 100 using an aluminum foil ribbon 410 that is drawn from a feed roller 403 and passed sequentially through an anodization station 430, an electroless plating station 440 and a reflector mounting station 450. That is, feed roller 403 is rotatably fixedly maintained at a fixed distance from anodization station 430, and rotates (unrolls) as ribbon 410 is drawn (pulled) through anodization station 430 to electroless plating station 440 and a reflector mounting station 450. This arrangement facilitating continuous, high-throughput fabrication of high-performance passive radiative cooling panels 100 by way of simultaneously processing different sections of ribbon 410, and sequentially conveying each ribbon section through each of the stations. That is, at a given time, anodizing is performed on a first ribbon section 410(S1) while plated metal is formed on a second ribbon section 410(S2) and a reflective layer is disposed on a third ribbon section 410(S3). In addition, after anodization is completed on first ribbon section 410(S1), ribbon 410 is conveyed such that the first ribbon section is passed to electroless plating station 440, and the later to reflector mounting station 450.

Referring to the left middle portion of Fig. 1, anodization station 430 includes a first guide mechanism (e.g., rollers 437) that is configured to guide a first ribbon section 410(S1) through a first chemical bath formed by an acid solution 432 disposed in a tank 431. According to a first aspect of the invention, anodization station 430 is configured to generate metamaterial nanostructures (i.e., subwavelength engineered structures with tailored optical properties) disposed in an ultra-black metamaterial-based pattern on aluminum foil ribbon section 410(S2). Specifically, referring to Fig. 1, the anodization of ribbon section 410(S1) is produced by forming an electrical circuit in which a voltage V is generated between ribbon section 410(S1), which forms an anode (positive pole) of the electrical circuit, and a positive pole (cathode) structure 433 (e.g., carbon/graphite sheets). Referring to completed panel 100 illustrated in perspective at the bottom of Fig. 1, this arrangement causes an oxide layer 115 to grow on ribbon 410 (which is later cut to form base aluminum layer (foil) 114, as depicted). As set forth in additional detail below, applied voltage V is controlled by way of a control circuit 435 such that the oxide layer grows on ribbon section 410(S1) in a way that produces metamaterial nanostructures disposed in an ultra-black metamaterial-based pattern. Referring again to the lower right portion of Fig. 1, completed panel 100 depicts metamaterial nanostructures 118 in an ultra-black metamaterial-based pattern 117 using a simplified layer representation, where metamaterial nanostructures 118 are depicted as being formed on or by a porous portion of aluminum oxide layer 115. The simplified representation utilized in Fig. 1 is intended to convey that, although the presently preferred embodiment described below implements ultra-black emitter 110 may be implemented using other metamaterial nanostructure types (e.g., nanotubes or non-tapered nanopores), including or other needle-like, dendritic or porous textured surfaces, some of which may be producible using anodization station 430, provided such alternative metamaterial nanostructures produce ultra-black emitter structures having the requisite optical properties set forth below.

Referring to the right middle portion of Fig. 1, electroless plating station 440 is disposed downstream from anodization station 430 and includes a second guide mechanism (e.g., rollers 447) configured to guide a second ribbon section 410(S2) through a second chemical bath comprising a plating solution 442 disposed in a tank 441). According to a second aspect of the invention, electroless plating station 440 is configured to deposit a suitable plating metal (e.g., Ni, Cu or Ag) over the previously formed metamaterial nanostructures such that the resulting metal-plated metamaterial nanostructures are configured to generate atmospheric transparency window (ATW) radiant energy in at least one atmospheric transparency window with an emissivity close to unity. That is, referring to completed panel 100 illustrated in perspective at the bottom of Fig. 1, plated metal layer 116 is disposed on metamaterial nanostructures 118 using known techniques such that the resulting metal-plated metamaterial nanostructures (i.e., metamaterial nanostructures 118 having plated metal layer 116 formed thereon in the manner described below) form an ultra-black material configured to generate ATW radiant energy having wavelengths in the primary ATW range of $8\mu m$ to $13\mu m$ (and optionally also in the secondary ATW range of $16\mu m$ to $28\mu m$) with an emissivity of at least 0.998.

Referring to the right side of Fig. 1, reflector mounting station 450 is disposed downstream from electroless plating station 440, and is configured to operably mount and secure a reflective layer 120 onto a third section 410(S3) of ribbon 410 such that the reflective layer 120 covers the metal-plated metamaterial nanostructures. In the illustrated embodiment, the mounting process involves training a reflector layer ribbon 420 from a (second) feed roller 405 onto third ribbon section 410(S3), and securing reflector layer ribbon 420 (e.g., by way of adhesive). As illustrated in completed panel 100 at the bottom of Fig. 1, reflective layer 120 is mounted onto a top surface 112 of ultra-black emitter 110 by way of an optional adhesive layer 130. According to another aspect of the invention, reflective layer 120 is implemented using a material (e.g., a solar mirror film) that is configured to shield ultra-black emitter 110 from solar radiation while permitting ATW radiant energy emitted from ultra-black emitter 110 to pass through reflective layer 120 for transmission into space. Exemplary spectral characteristics for reflective layer 120 are depicted in the graph disposed in the lower left portion of Fig. 1. Specifically, reflective layer 120 comprises a material that exhibits a reflectance of at least 90% for radiant energy having wavelengths of $2\mu m$ or less, and exhibits a reflectance of 10% or less for radiant energy having wavelengths in the range of $8\mu m$ to $13\mu m$. In some embodiments, commercially available solar mirror films currently used in concentrating solar power (CSP) collectors (e.g., solar films produced by 3M Corporation of St. Paul, Minn. USA, or by ReflecTech, Inc. of Arvada, CO USA) exhibit spectral characteristics that are close enough to the desired spectrum, and may be cost-effectively utilized as reflective layer 120. In other cases, a reflective material fabricated using known custom engineering techniques to selectively transmit only ATW radiant energy emitted by a given ultra-black emitter may be utilized to implement reflective layer 120.

Although Fig. 1 depicts system 400 as performing the anodization process and the electroless planting simultaneously on different sections of ribbon 410, in other embodiments these processes may be implemented on separate aluminum foil segments that are sequentially passed by other conveying mechanisms to each of the stations. However, by utilizing the arrangement depicted in Fig. 1 (i.e., such that aluminum foil ribbon 410 extends from feed roller 403 sequentially through the first and second chemical baths such that said anodizing is performed on ribbon section 410(S1) while electroless plating is simultaneously performed on ribbon section 410(S2)), overall production costs are substantially reduced. Similarly, although reflective layer sheets may be mounted onto corresponding ultra-black emitter sections using other approaches, by utilizing the arrangement depicted in Fig. 1 (i.e., attaching aluminum foil ribbon while said electroless plating and anodization are simultaneously performed on upstream ribbon sections 410(S2) and 410(S1)), overall production costs are further reduced.

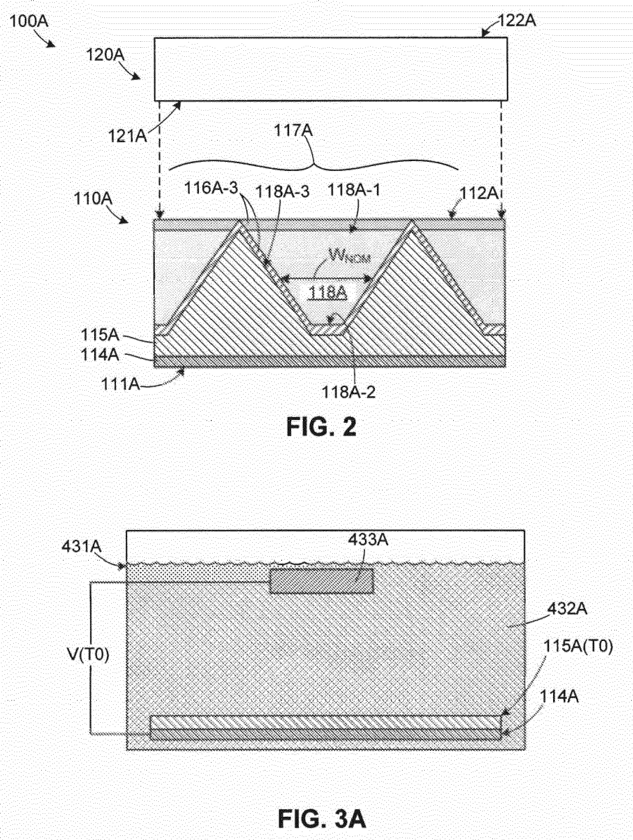

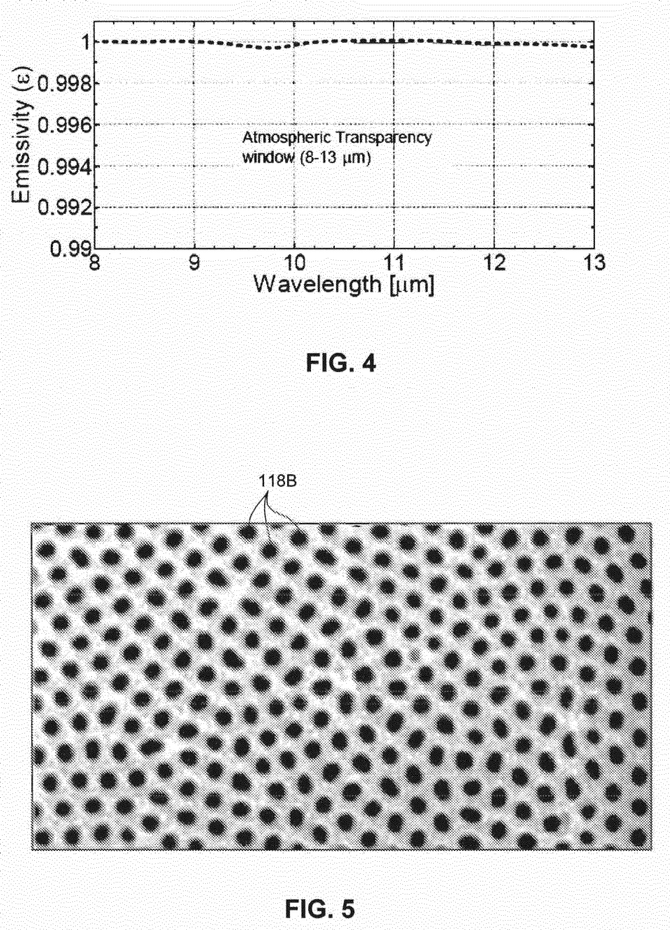

Fig. 2 is a partial cross-sectional side view showing simplified panel 100A including an emitter 110A and a reflective layer 120A according to another embodiment of the present invention in which a modified Anodic Aluminum Oxide (AAO) self-assembly template technique to generated tapered nanopores 118A disposed in a hexagonally packed array on an aluminum foil 114A, and then utilizes electroless plating to form plated metal layer 116A (e.g., Ni, Cu or Ag) inside tapered nanopores 118A. As described below, during the AAO process aluminum foil 114A is anodized in an acid solution to form porous alumina (aluminum oxide) layer 115A thereon such that the alumina layer 115A includes self-formed, hexagonally packed arrays of tapered nanopores similar to the arrangement shown in Fig. 5 (which shows generic nanopores 118B dispsoed in an exemplary hexagonally packed array). As indicated in Fig. 2, each tapered nanopore 118A is a pit-like cavity having an open upper end 118A-1 defined through the top emitter surface 112A, a closed lower end 118A-2 disposed inside oxide layer 115A, and a substantially conical-shaped side wall 118A-3 extending between the open upper end 118A-1 and the closed lower end 118A-2. In this embodiment, open upper end 118A-1 has a larger diameter than closed lower end 118A-2 such that a diameter of the conic side wall 118A-3 decreases inside each tapered nanopore (i.e., decreases in proportion to a distance from top surface 112A). Once tapered nanopores 118A are formed, electroless plating is performed to generate plated metal layer 116A inside tapered nanopores 118A and on any remaining upper surface areas of oxide layer 115A to complete ultra-black emitter 110A. As set forth above, once ultra-black emitter 110A is completed, reflective layer 120A is mounted onto upper surface 112A in the manner described above.

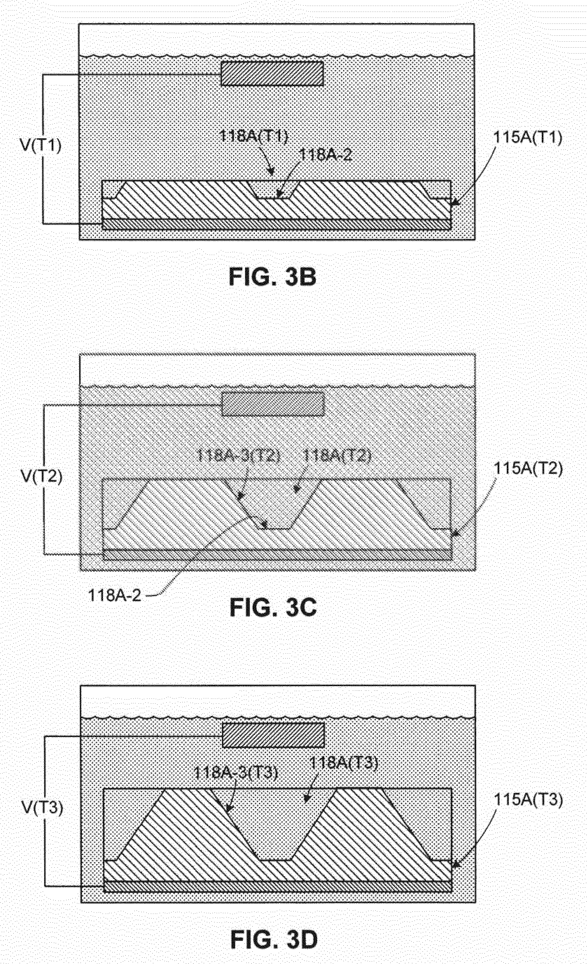

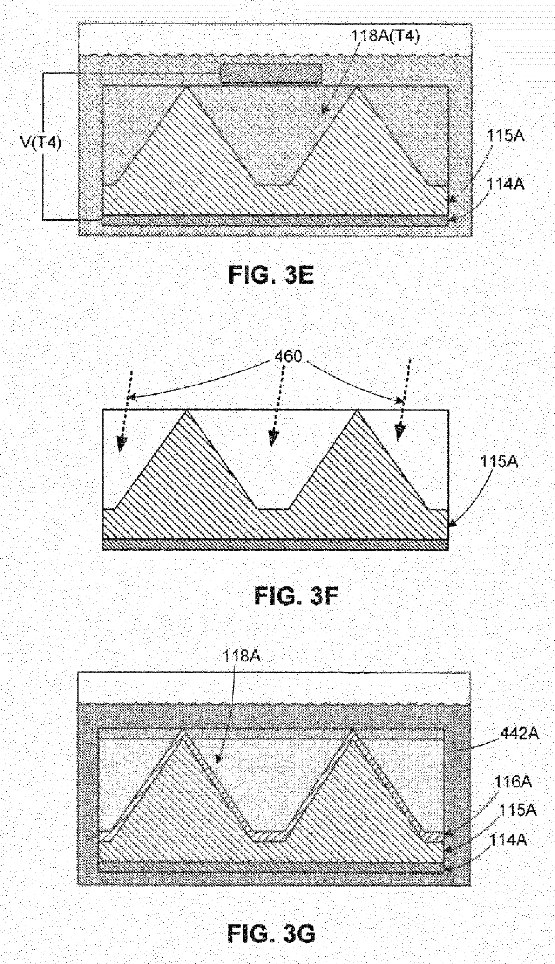

Figs. 3A to 3G illustrate the AAO process and subsequent plating process utilized to generate ultra-black emitter 110A in additional detail. Fig. 3A shows the AAO process at a time T0, after aluminum foil 114A is immersed in a chemical bath comprising an acid solution (e.g., 15% sulfuric acid) in a tank 431A, and applying an initial voltage V(T0) between an anode (e.g., graphite) and aluminum foil 114A, thereby causing an initial aluminum oxide layer 115A(T0) to form on aluminum foil 114A. Fig. 3B shows the AAO process at a subsequent time T1 when applied voltage V(T1) is either at the initial voltage level or has been incrementally increased. At this point aluminum oxide layer 115A(T0) begins to generate porous openings that are relatively small due to the relatively low applied voltage V(T1), thereby forming the characteristic lower end portion 118A-2 of partially formed tapered nanopore 118A(T1). Fig. 3C shows the AAO process at a subsequent time T2 when applied voltage V(T2) has been incrementally increased such that the portion of aluminum oxide layer 115A(T2) generated under applied voltage V(T2) produces larger porous openings, whereby partially formed tapered nanopore 118A(T2) begins to generate characteristic conic sidewalls 118A-3(T2) that have a larger diameter than that of lower end portion 118A-2. Fig. 3D shows the AAO process at a subsequent time T3 when applied voltage V(T3) has been again incrementally increased, whereby aluminum oxide layer 115A(T3) is generated with even larger porous openings, whereby the diameter of partially formed tapered nanopore 118A(T3) at the conic sidewalls 118A-3(T3) is even larger. Fig. 3E shows the AAO process at a subsequent time T4 when the formation of tapered nanopores 118A is completed using a final (highest) voltage level V(T4). Subsequent to the completion of the AAO process, the applied voltage is turned off, and aluminum foil 114A, with completed aluminum oxide layer 115A formed thereon, is removed from the chemical bath. As depicted in Fig. 3F, aluminum foil 114A is then moved to a pre-treating station and $PdCl_2$ 460 is utilized to activate the surface of aluminum oxide 115A. Finally, as indicated in Fig. 3G, aluminum foil 114A is immersed in a second chemical bath including a nickel-phosphorous solution 442A, whereby a nickel plated metal layer 116A is formed on the surface of aluminum oxide layer 115A and inside tapered nanopores 118A, whereby Ni-coated tapered nanopores 118A are completed. Metal-plated tapered nanopores formed in accordance with the described AAO process are believed to form a new class of ultra-black metamaterials that are believed to provide superior optical characteristics for generating ATW radiant energy with an emissivity close to unity. That is, by forming ultra-black emitter 110A with tapered nanopores 118A using the AAO self-assembly template technique, and then electroless plating a second metal 116A (e.g., Ni, Cu or Ag) onto alumina layer 115A in the manner described above, superior metal-coated tapered nanopores are produced with high efficiency, and in a manner that facilitates low-cost mass production of passive radiative cooling panels 100D using cost-effective roll-to-roll mass-production manufacturing techniques. The dashed line in Fig. 5, which indicates emissivity values generated using finite element method (FEM) simulations, shows that emitter layer 110A exhibits an emissivity close to unity in the atmospheric transparency window of $8\mu m$ to $13\mu m$.

According to another embodiment of the present invention, the passive radiative cooling panels produced using the novel methods set forth above are further processed to form modular units (modules) that are connectable in series and parallel to produce dry cooling systems that can be scaled to achieve a target coolant temperature drop for a given coolant volume and flow rate.

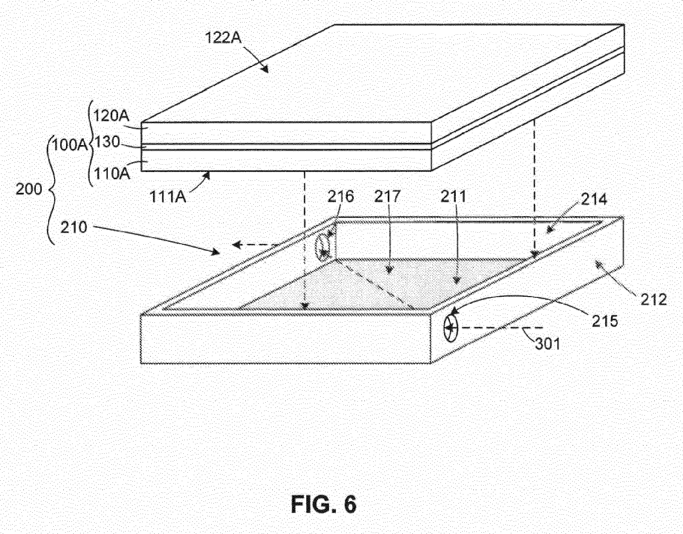

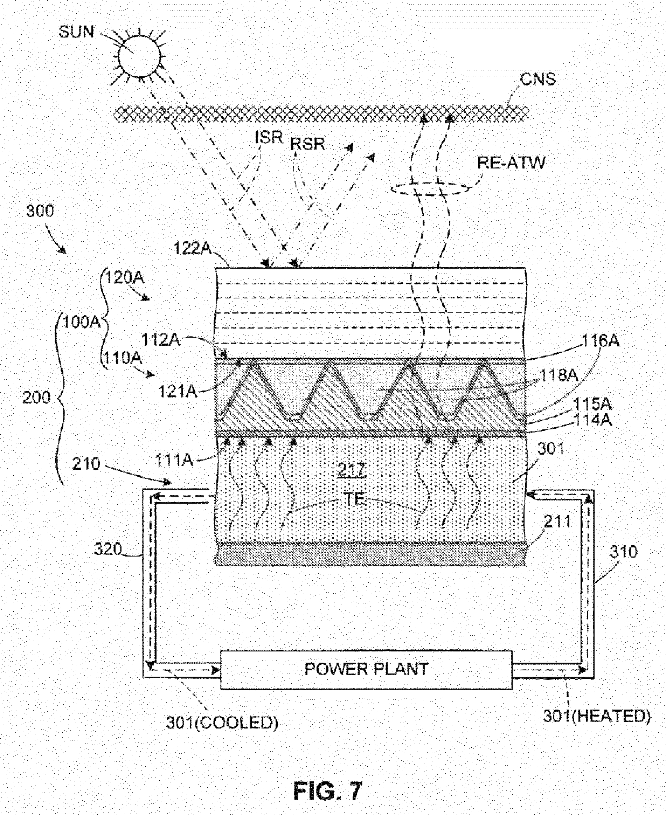

Fig. 6 depicts forming an exemplary module 200 according to another exemplary embodiment of the present invention, wherein panel 100A (which is produced in the manner set forth above) is mounted onto a conduit structure 210 such that conduit structure 210 and lower surface 111A of ultra-black emitter 110A define a heat-exchange/flow channel 217 that is configured as described below with reference to Fig. 7. In the exemplary embodiment, conduit structure 210 includes a lower wall 211 and a raised peripheral wall 212 configured to collectively form a box-like frame having an open top 214. To facilitate the flow of coolant through conduit structure 210, an inlet port 215 is defined at one end of the box-like frame, and an outlet port 216 is defined at the opposite end. During operation, as indicated by the dashed-line arrows, coolant 301 enters conduit structure 210 through inlet port 215, passes through heat-exchange channel 217, and exits conduit structure 210 through outlet port 216.

Fig. 7 shows a portion of module 200 in an assembled state and during operation. As indicated in Fig. 7, the open top conduit structure 210 is covered (sealed) by emitter 110A when conduit structure 210 is operably mounted under panel 110A. Specifically, after assembly, heat-exchange channel 217 becomes a substantially hollow region defined by (i.e., surrounded by) bottom surface 111A of aluminum foil 114A, the upward facing surface of the lower wall 211, and the inward-facing surfaces of the box-like structure's peripheral walls (i.e., walls 212 shown in Fig. 6). Because bottom surface 111A of aluminum foil 114A forms the upper surface of heat-exchange channel 217, coolant 301 necessarily flows against (i.e., contacts) bottom surface 111A as it passes through heat-exchange channel 217, thereby facilitating the transfer of thermal energy (heat) TE through aluminum foil 114A to metal-plated tapered nanopores 118A, which then convert the thermal energy into ATW radiant energy RE-ATW that is then transmitted through reflective layer 120A and into cold near space CNS.

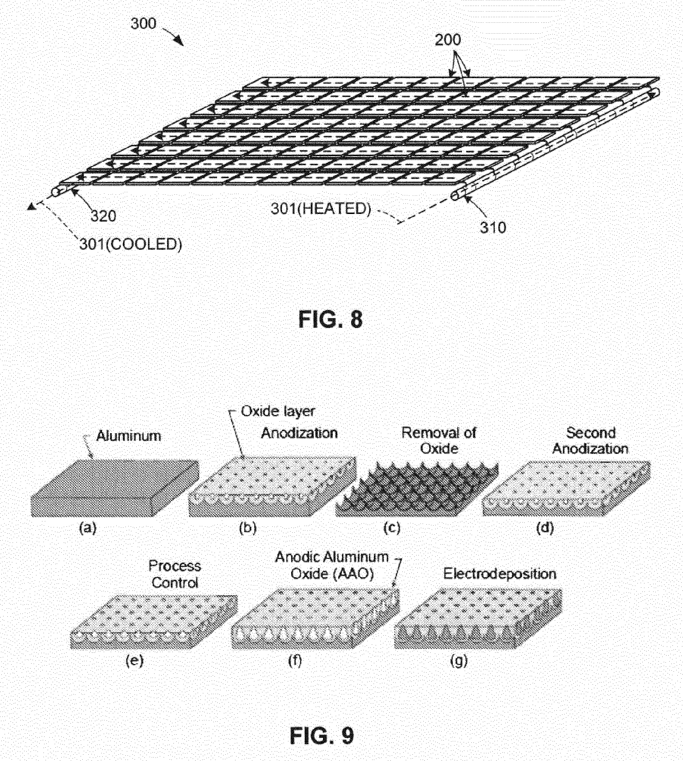

Fig. 7 also shows a simplified dry cooling system 300 utilizing module 200 (described above with reference to Fig. 6) during daylight operation (i.e., while incident solar radiation ISR is directed by the sun onto upper surface 122A of reflective layer 120A. In addition to module 200, system 300 includes a flow control system including an inflow pipe 310 to transmit (conduct) heated coolant 301 from an object (e.g., a power plant) to module 200, and utilizes an outflow pipe 320 to transmit cooled coolant 301 for return to the power plant. Inflow pipe 310 is operably coupled to the inlet port of conduit 210 (shown in Fig. 6), and outflow pipe 320 is operably coupled to the outlet port of conduit 210. An optional pump (not shown) causes coolant 301 to flow at a determined flow rate and volume. By producing module 200 with a given "standard" size (e.g., with panel 100 having a unit coverage area of $1m^2$ and with heat-exchange channel 217 having a volume of 1 liter), the number and arrangement of modules 200 required to provide sufficient cooling power for a given object (e.g., power plant) can be readily determined for a target coolant temperature drop and coolant volume/flow rate. The temperature difference of coolant 301 between inflow pipe 310 and outflow pipe 320 thus depends on the net cooling power of modules 200, the total coverage area, the hydraulic geometry and size, the fluid flow rate, the water temperature, and the conduction losses. By properly sizing inflow pipe 310 and outflow pipe 320 and connecting a sufficient number of modules 200 of a given standard size in series and parallel in the manner described below with reference to Fig. 8, module-based system 300 is easily scalable to provide sufficient cooling power to achieve a target temperature drop for any volume/flow rate of coolant. Additional detail regarding system 300 is described in co-owned and co-pending U.S. patent application Serial No. 14/740051, entitled PASSIVE RADIATIVE DRY COOLING MODULE/SYSTEM USING METAMATERIALS-ENHANCED ULTRA-BLACK MATERIALS [Atty Docket No. 20150088US03 (XCP-207-3)], which is incorporated by reference herein in its entirety. Based on preliminary experimental results using a prototype, water temperature drops of 8°C are believed to be achievable. Using a system comprising modules covering $1 km^2$ (~10 MW of total radiative cooling power), with a typical closed-loop flow rate of $10^5$ gal/min, each module processes approximately 30 gal/min for a suitable parallel distribution of water flow, resulting in less than 1 psi of pressure drop per panel. This translates to the use of a pump having a hydraulic power of approximately 1.3 MW, which represents less than 0.5% increase in the hydraulic power of a 500 MW power plant. This is easily offset by the cooling water temperature drop, leading to a net plant efficiency gain of approximately 3%.

Although the present invention has been described with respect to certain specific embodiments, it will be clear to those skilled in the art that the inventive features of the present invention are applicable to other embodiments as well, all of which are intended to fall within the scope of the present invention. For example, although the present invention is described with reference to electroless plating, other metal plating processes may be utilized. Further, the anodization process may be adjusted to form increasing nanopore configurations (i.e., in place of the decreasing tapered nanopore described above) by gradually decreasing the applied voltage. In addition, as indicated in the diagram shown in Fig. 9, a two-step anodization process may be utilized in which oxide generated during the first anodization step is removed before starting the second anodization process. The pores resulting from the first anodization process are highly disordered, and the removal of the first oxide layer serves as initiation sites for the new pores. The second anodization process yields a well-ordered pore distribution.

## Claims

1.   A method for producing passive radiative cooling panels on an aluminum foil, the method comprising:

anodizing said aluminum foil using a first chemical bath such that metamaterial nanostructures disposed in an ultra-black metamaterial-based pattern are generated on said aluminum foil;
forming a plated metal layer over said metamaterial nanostructures using a second chemical bath, thereby forming metal-plated metamaterial nanostructures on said aluminum foil; and
mounting a reflective layer onto said aluminum foil such that the reflective layer covers said metal coated metamaterial nanostructures,
wherein anodizing and forming said plated metal layer are performed such that said metal-plated metamaterial nanostructures are configured to generate radiant energy having wavelengths in the range of $8\mu m$ to $13\mu m$ with an emissivity of at least 0.998, and
wherein the reflective layer is configured to have a reflectance of at least 90% for radiant energy having wavelengths of $2\mu m$ or less, and is also configured to have a reflectance of 10% or less for radiant energy having wavelengths in the range of $8\mu m$ to $13\mu m$.

2.   The method of Claim 1, wherein said method includes training an aluminum foil ribbon from a feed roller sequentially through said first chemical bath and said second chemical bath such that said anodizing is performed on a first section of said aluminum foil ribbon while forming said plated metal is performed on a second section of said aluminum foil ribbon.

3.   The method of Claim 2, wherein said anodizing comprises controlling the formation of an aluminum oxide layer on the first section of said aluminum foil ribbon such that said metamaterial nanostructures comprise one of nanopores and nanotubes formed by said aluminum oxide layer.

4. The method of Claim 2, wherein forming said plated metal comprises disposing said second section of said aluminum foil ribbon in a solution and electroplating one or more of nickel (Ni) copper (Cu) and gold (Ag) from said solution onto said second section of said aluminum foil ribbon.

5. The method of Claim 2, wherein said anodizing comprises controlling the formation of an aluminum oxide layer on the first section of said aluminum foil ribbon by varying an applied voltage over time such that said metamaterial nanostructures comprise tapered nanopores formed by said aluminum oxide layer.

6. The method of Claim 5, wherein forming said plated metal comprises disposing said second section of said aluminum foil ribbon in a solution comprising one or more of nickel (Ni) copper (Cu) and gold (Ag) such that said one or more of Ni, Cu and Ag form metal-plated surfaces on said tapered nanopores by electroless plating.

7. The method of Claim 2, wherein mounting said reflective layer comprises training a reflector layer ribbon from a second feed roller such that reflector layer ribbon is secured to a third section of said aluminum foil ribbon while forming said plated metal is performed on said second section and said anodizing is performed on said first section.

8. A fabrication system for producing passive radiative cooling panels on an aluminum ribbon drawn from a feed roller, the system comprising:

> an anodization station including a first guide mechanism configured to guide a first section of said ribbon through a first chemical bath, said anodization station being configured to generate metamaterial nanostructures disposed in an ultra-black metamaterial-based pattern on said first ribbon section;
> a metal plating station disposed downstream from said anodization station including a second guide mechanism configured to guide a second section of said ribbon through a second chemical bath, said metal plating station being configured to deposit a plated metal over previously formed metamaterial nanostructures to produce metal-plated metamaterial nanostructures configured to generate radiant energy having wavelengths in the range of $8\mu m$ to $13\mu m$ with an emissivity of at least 0.998; and
> a reflector mounting station configured to mount a reflective layer onto a third section of said ribbon such that the reflective layer covers said metal-plated metamaterial nanostructures, wherein the reflective layer is configured to have a reflectance of at least 90% for radiant energy having wavelengths of $2\mu m$ or less, and is also configured to have a reflectance of 10% or less for radiant energy having wavelengths in the range of $8\mu m$ to $13\mu m$.

9. A method for producing a passive radiative cooling module, the method comprising:

> anodizing an aluminum foil while the controlling the formation of an aluminum oxide layer on the aluminum foil using an Anodic Aluminum Oxide (AAO) self-assembly template technique such that tapered nanopores disposed in a hexagonally packed array are formed in said aluminum oxide layer on a first surface of said aluminum foil;
> forming a plated metal layer onto the first surface of said aluminum foil such that said plated metal layer is formed on tapered side walls disposed inside said tapered nanopores, thereby forming metal-coated tapered nanopores;
> mounting a reflective layer onto said first surface of said aluminum foil; and
> mounting a conduit structure under aluminum foil such that said conduit structure and a second surface of said aluminum foil define a flow channel configured to contain a coolant such that the coolant contacts the second surface of said aluminum foil, whereby thermal energy from the coolant is transferred through said aluminum foil to said metal-coated tapered nanopores.

10. The method of Claim 9, wherein said anodizing comprises disposing the aluminum foil in a first tank containing an acid solution and a cathode, and gradually changing a voltage applied between said aluminum foil and said cathode during said anodizating.

**FIG. 1**

EP 3 138 939 A2

FIG. 2

FIG. 3A

FIG. 3B

FIG. 3C

FIG. 3D

118A(T4)

115A

114A

V(T4)

**FIG. 3E**

460

115A

**FIG. 3F**

118A

442A

116A

115A

114A

**FIG. 3G**

**FIG. 4**

**FIG. 5**

**FIG. 6**

**FIG. 7**

FIG. 8

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 740051 A